# EUROPÄISCHE PATENTSCHRIFT

(11) **EP 3 500 767 B1**
(45) Veröffentlichungstag und Bekanntmachung des Hinweises auf die Patenterteilung: **13.05.2020**
(21) Anmeldenummer: 17758429.9
(22) Anmeldetag: 15.08.2017
(51) Int. Cl.: F16D 1/10, F16D 13/70

(54) **REIBUNGSKUPPLUNG**
FRICTION CLUTCH
EMBRAYAGE À FRICTION

(30) Priorität: 19.08.2016 DE 102016215596
(43) Veröffentlichungstag der Anmeldung: 26.06.2019
(73) Patentinhaber: Schaeffler Technologies AG & Co. KG, 91074 Herzogenaurach (DE)
(72) Erfinder: HOPPE, Marcus, 77855 Achern (DE)
(86) Internationale Anmeldenummer: PCT/DE2017/100683
(87) Internationale Veröffentlichungsnummer: WO 2018/033183

(56) Entgegenhaltungen:
- DE-A1-102009 053 034
- DE-A1-102013 204 986
- DE-A1-102014 215 925

## Beschreibung

Die vorliegende Erfindung betrifft eine Reibungskupplung, insbesondere eine Einzelkupplung, eine Mehrscheibenkupplung oder eine Doppelkupplung, für einen Antriebsstrang eines Kraftfahrzeugs.

Aus der WO 2011/124203 A1 sind verschiedene Ausführungsformen von Doppelkupplungen bekannt. Bei einigen Ausführungsformen stützt sich eine Gegenplatte selber über ein Lager an einer Abtriebsseite ab. In anderen Ausführungsformen ist eine Abstützung über ein Befestigungsblech oder ein Deckellager realisiert. Weiter sind aus der WO 2011/124203 A1 ein Mitnehmer und eine Lagernabe bekannt, die jeweils mit einer Gegenplatte verbunden sind. Über den Mitnehmer wird eine Steckverzahnung mit einem Feder-Dämpfer-System realisiert und eine Verbindung zwischen einer Antriebsseite (z. B. eine Kurbelwelle einer Verbrennungskraftmaschine) und der Gegenplatte hergestellt. Über die Lagernabe wird eine Abstützung der Gegenplatte in der radialen Richtung sichergestellt. Dabei sind der Mitnehmer und gerade die Lagernabe vollumfänglich geschlossen ausgeführt, so dass ein Wärmetausch über den Spalt zwischen Reibpaket und Antriebsseite zumindest erschwert ist.

Bezüglich weiteren Standes der Technik wird auf die DE 10 2013 204986 A1, die DE 10 2014 215925 A1 und die DE 10 2009 053034 A1 verwiesen.

Hiervon ausgehend liegt der vorliegenden Erfindung die Aufgabe zugrunde, die aus dem Stand der Technik bekannten Probleme zumindest teilweise zu lösen und eine Reibungskupplung anzugeben, die möglichst einfach und kompakt aufgebaut sowie günstig herstellbar ist. Weiter soll eine bessere Wärmeabfuhr aus dem Bereich des Reibpakets realisiert werden.

Die Aufgabe wird durch die Merkmale des unabhängigen Patentanspruchs 1 gelöst. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung betrifft eine Reibungskupplung für einen Antriebsstrang eines Kraftfahrzeugs, zur Übertragung von Drehmomenten zwischen einer Antriebsseite und einer Abtriebsseite, mit mindestens einem ersten Reibpaket, zumindest umfassend eine Gegenplatte, eine durch eine Betätigungsvorrichtung der Reibungskupplung in einer axialen Richtung gegenüber der Gegenplatte begrenzt verlagerbare Anpressplatte, sowie mindestens eine Kupplungsscheibe mit mindestens einem Reibbelag, die entlang der axialen Richtung zwischen der Anpressplatte und der Gegenplatte angeordnet ist; wobei ein Mitnehmerring zur formschlüssigen Übertragung der Drehmomente von der Antriebsseite auf das erste Reibpaket an einer Anbindungsfläche der Gegenplatte befestigt ist; wobei der Mitnehmerring über eine Lagerfläche an der Abtriebsseite so lagerbar ist, dass zumindest in einer ersten axialen Richtung auf den Mitnehmerring wirkende Betätigungskräfte der Betätigungsvorrichtung abgestützt sind; wobei der Mitnehmerring über eine Mehrzahl von Befestigungspunkten an der Anbindungsfläche befestigt ist, wobei die Befestigungspunkte in einer Umfangsrichtung voneinander beabstandet angeordnet sind, wobei zwischen den Befestigungspunkten jeweils Spalte vorliegen, durch die ein Fluidaustausch entlang der radialen Richtung zwischen der Anbindungsfläche und dem Mitnehmerring möglich ist.

Die Reibungskupplung ist zwischen einer Antriebsseite (z. B. eine Kurbelwelle einer Verbrennungskraftmaschine) und einer Abtriebsseite (z. B. eine oder mehrere Getriebeeingangswellen eines Getriebes) zur Übertragung von Drehmomenten angeordnet. Ein Mitnehmerring überträgt die Drehmomente von der Antriebseite auf ein Reibpaket der Reibungskupplung. Dafür bildet der Mitnehmerring insbesondere eine aus der WO 2011/124203 A1 bekannte Steckverzahnung mit einem entsprechend geformten Gegenstück der Antriebsseite aus. Der Mitnehmerring kann also insbesondere über eine Verschiebung entlang der axialen Richtung bei der Montage der Reibungskupplung mit dem Gegenstück der Antriebsseite zur Ausbildung der (in einer Umfangsrichtung formschlüssigen) Steckverzahnung verbunden werden.

Der Mitnehmerring ist insbesondere über eine Lagerfläche des Mitnehmerrings an der Abtriebsseite (also z. B. einer Getriebeeingangswelle) so lagerbar, dass zumindest die, in einer ersten axialen Richtung auf den Mitnehmerring wirkenden Betätigungskräfte der Betätigungsvorrichtung abgestützt sind. Die Ausbildung der Lagerfläche an dem Mitnehmerring ermöglicht, dass die Gegenplatte sich im Wesentlichen nur über den Bereich des Reibbelags erstrecken muss. Die üblicherweise sehr steif ausgelegte und daher üblicherweise gießtechnisch hergestellte Gegenplatte kann damit wesentlich leichter ausgeführt werden, da sie sich in der radialen Richtung nicht bis zu einer eigenen Lagerfläche an der Abtriebsseite (z. B. der Getriebeeingangswelle) erstreckt. Die Lagerfläche wird hier nun durch den Mitnehmerring gebildet, wobei der Mitnehmerring eine gegenüber der Gegenplatte deutlich reduzierte (mittlere) Wandstärke aufweisen kann.

Die Gegenplatte ist insbesondere als Bestandteil eines (ersten) Zwei-Massen-Schwungrades ausgebildet, wobei dann der Mitnehmerring z. B. eine Eingangsseite des (ersten) Zwei-Massen-Schwungrades mit einer Antriebsseite (z. B. einer Kurbelwelle) verbindet. Alternativ oder zusätzlich kann ein (zweites) Zwei-Massen-Schwungrad an der Antriebseite angeordnet sein, so dass der an einer Gegenplatte eines Reibpakets (oder an einer Eingangsseite eines weiteren (dann ersten) Zwei-Massen-Schwungrades) angeordnete Mitnehmerring mit der Ausgangsseite des (zweiten) Zwei-Massen-Schwungrades die Steckverbindung mit der Antriebsseite ausbildet. Bevorzugt ist die Gegenplatte eine gedämpfte Gegenplatte.

Die Gegenplatte ist insbesondere in der axialen Richtung nicht verlagerbar.

Insbesondere ist der Mitnehmerring über eine Mehrzahl von Befestigungspunkten an der Anbindungsfläche befestigt, wobei die Befestigungspunkte in einer Umfangsrichtung, bevorzugt gleichmäßig, voneinander beabstandet angeordnet sind. Zwischen (zumindest einigen, insbesondere zwischen allen) Befestigungspunkten liegen jeweils Spalte vor, durch die ein Fluidaustausch entlang der radialen Richtung zwischen der Anbindungsfläche und dem Mitnehmerring möglich ist.

Damit kann Wärme aus dem Bereich des Reibpakets über die Spalte von in der radialen Richtung von innen nach außen abgeführt werden.

Erfindungsgemäß sind die Spalte durch sich in der axialen Richtung erstreckende Erhebungen auf zumindest einer von Anbindungsfläche und Mitnehmerring gebildet, wobei die Erhebungen in der Umfangsrichtung (insbesondere entsprechend den Befestigungspunkten) voneinander beabstandet angeordnet sind. Zwischen diesen Erhebungen sind also Freiräume ausgebildet, durch die ein Fluidaustausch (Luft oder Öl; und damit ein Wärmeaustausch) in der radialen Richtung von innen nach außen erfolgen kann.

Insbesondere sind erste Erhebungen an der Gegenplatte angeordnet, die sich hin zum Mitnehmerring erstrecken.

Insbesondere sind zweite Erhebungen an dem Mitnehmerring ausbildet, die sich hin zur Gegenplatte erstrecken.

Die (zweiten) Erhebungen können durch Bereiche mit erhöhter Wandstärke (größere Materialdicke) gebildet sein (gegenüber den Bereichen, in denen die Spalte angeordnet sind) und/oder durch Umformung erzeugt worden sein.

Insbesondere ist die Anbindungsfläche (mit den Befestigungspunkten und/oder Erhebungen) in einer radialen Richtung auf einer Höhe des mindestens einen Reibbelags oder innerhalb davon angeordnet. Insbesondere erstreckt sich der Mitnehmerring nur bis zu den Befestigungspunkten oder ggf. unwesentlich darüber hinaus. Durch die Anordnung der Befestigungspunkte in der radialen Richtung so weit innerhalb kann das Gewicht des Mitnehmerrings reduziert werden.

Bevorzugt ist der Mitnehmerring durch ein Umformverfahren hergestellt. Zu den Umformverfahren zählen insbesondere Ziehverfahren und Biegeverfahren. Insbesondere ist der Mitnehmerring also nicht gießtechnisch hergestellt. Damit kann ein Material für den Mitnehmerring und auch ein Herstellungsprozess ohne die Einschränkung auf ein Gießverfahren ausgewählt werden.

Der Mitnehmerring kann weiterhin durch ein Stanzverfahren hergestellt werden, wobei sich Umformverfahren an das Stanzverfahren anschließen bzw. diesem ggf. zusätzlich vorgelagert sind.

Insbesondere ist eine spanende Bearbeitung (wobei Stanzen insbesondere nicht dazugezählt wird) des Mitnehmerrings, insbesondere der Lagerfläche bzw. einer Innenumfangsfläche, z. B. durch Drehen oder Fräsen, nicht notwendig. Ggf. ist eine spanende Bearbeitung ausschließlich zur Herstellung von Durchgangslöchern zur Realisierung der Befestigung über die Anbindungsfläche notwendig.

Insbesondere ist die Lagerfläche an einer Innenumfangsfläche des Mitnehmerrings angeordnet, wobei sich der Mitnehmerring, entlang der radialen Richtung und ausgehend von der Befestigung an der Anbindungsfläche, zwischen der Befestigung und der Lagerfläche ausschließlich entlang der ersten axialen Richtung erstreckt.

Damit kann insbesondere die Steifigkeit des Mitnehmerrings gegenüber den entlang der ersten axialen Richtung auf den Mitnehmerring wirkenden Betätigungskräften der Betätigungsvorrichtung, erhöht werden. Die Wandstärke des Mitnehmerrings kann so noch weiter reduziert werden, so dass eine weitere Gewichtseinsparung ermöglicht wird.

Insbesondere wird die Lagerfläche durch eine Innenumfangsfläche des Mitnehmerrings gebildet, die durch einen Umformprozess (z. B. durch Biegen), ausgehend von einem flachen Stanzteil, hergestellt ist. Die Lagerfläche wird also durch einen inneren Bereich eines flachen Ausgangsteil erzeugt, so dass Stanzabfälle aus dem Herstellungsprozess reduziert werden können (der auszustanzende Teil des flachen Ausgangsteils ist nun deutlich kleiner, da ein Teil des inneren Bereichs ja umgebogen und als Lagerfläche genutzt wird).

Insbesondere ist der Mitnehmerring über Nietverbindungen an der Anbindungsfläche befestigt. Alternativ ist auch eine Befestigung z. B. über Schrauben oder über Schweiß- bzw. Lötverbindungen möglich.

Damit sind kraftschlüssige, in Umfangsrichtung formschlüssige, aber auch stoffschlüssige Befestigungen des Mitnehmerrings an der Anbindungsfläche möglich.

Kraftschlüssige Verbindungen setzen eine Normal-Kraft auf die miteinander zu verbindenden Flächen voraus. Ihre gegenseitige Verschiebung ist verhindert, solange die durch die Haftreibung bewirkte Gegen-Kraft nicht überschritten wird. Formschlüssige Verbindungen entstehen durch das Ineinandergreifen von mindestens zwei Verbindungspartnern. Dadurch können sich die Verbindungspartner auch ohne oder bei unterbrochener Kraftübertragung nicht lösen. Anders ausgedrückt ist bei einer formschlüssigen Verbindung der eine Verbindungspartner dem anderen im Weg. Stoffschlüssige Verbindungen werden alle Verbindungen genannt, bei denen die Verbindungspartner durch atomare oder molekulare Kräfte zusammengehalten werden. Sie sind gleichzeitig nicht lösbare Verbindungen, die sich nur durch Zerstörung der Verbindungsmittel trennen lassen.

Wie oben bereits ausgeführt, ist die Gegenplatte insbesondere ein Bestandteil eines Zwei-Massen-Schwungrades bzw. eines Feder-Dämpfer-Systems.

Gemäß einer ersten Ausgestaltung weist die Reibungskupplung nur ein Reibpaket auf.

Gemäß einer zweiten Ausgestaltung weist die Reibungskupplung zwei Reibpakete auf, wobei die zwei Reibpakete zusammen zwei Gegenplatten und zwei Anpressplatten aufweisen.

Es wird weiter eine Drehmomentübertragungseinrichtung vorgeschlagen, zumindest umfassend eine erfindungsgemäße Reibungskupplung sowie ein Lager zur Lagerung des Mitnehmerrings an einer Abtriebsseite, wobei das Lager eine ebene äußere Umfangsfläche zur Anbindung an die Innenumfangsfläche des Mitnehmerrings aufweist. Als Lager ist so insbesondere ein Standardlager verwendbar, dessen äußere Umfangsfläche insbesondere keinen zusätzlichen (sonst üblichen) Anschlag zur Abstützung des Mitnehmerrings oder einer Gegenplatte aufweist. Das Lager ist insbesondere ein Wälzlager mit einem Außenring, einem Innenring, sowie dazwischen angeordneten Wälzkörpern. Insbesondere sind also sowohl die äußere Umfangsfläche des Außenrings als auch die innere Umfangsfläche des Innenrings eben und zylindrisch ausgeführt, so dass eine geometrische Anpassung des Lagers an den hier vorgesehenen Einsatzzweck nicht notwendig ist.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Gleiche Bezugszeichen bezeichnen gleiche Gegenstände. Es zeigen:
- Fig. 1:: eine Reibungskupplung mit einer an der Abtriebsseite gelagerten Gegenplatte in einer Seitenansicht im Schnitt;
- Fig. 2:: eine Reibungskupplung mit einer an der Abtriebsseite gelagerten Gegenplatte und einem Mitnehmerring in einer Seitenansicht im Schnitt;
- Fig. 3:: eine Gegenplatte mit Mitnehmerring in einer perspektivischen Ansicht im Schnitt;
- Fig. 4:: die Gegenplatte nach Fig. 3 in einer perspektivischen Ansicht;
- Fig. 5:: die Gegenplatte nach Fig. 4 in einer anderen perspektivischen Ansicht;
- Fig. 6:: den Mitnehmerring nach Fig. 3 in einer perspektivischen Ansicht;
- Fig. 7:: eine Reibungskupplung mit einer, an einem an der Abtriebsseite angeordneten Lager gelagerten Gegenplatte in einer perspektivischen Ansicht im Schnitt;
- Fig. 8:: eine Reibungskupplung mit einer Gegenplatte und Mitnehmerring nach Fig. 3 in einer perspektivischen Ansicht im Schnitt;
- Fig. 9:: einen anderen Mitnehmerring in einer perspektivischen Ansicht;
- Fig. 10:: den anderen Mitnehmerring nach Fig. 9 in einer perspektivischen Ansicht im Schnitt; und
- Fig. 11:: den anderen Mitnehmerring nach Fig. 9 und 10 in einer Seitenansicht im Schnitt.

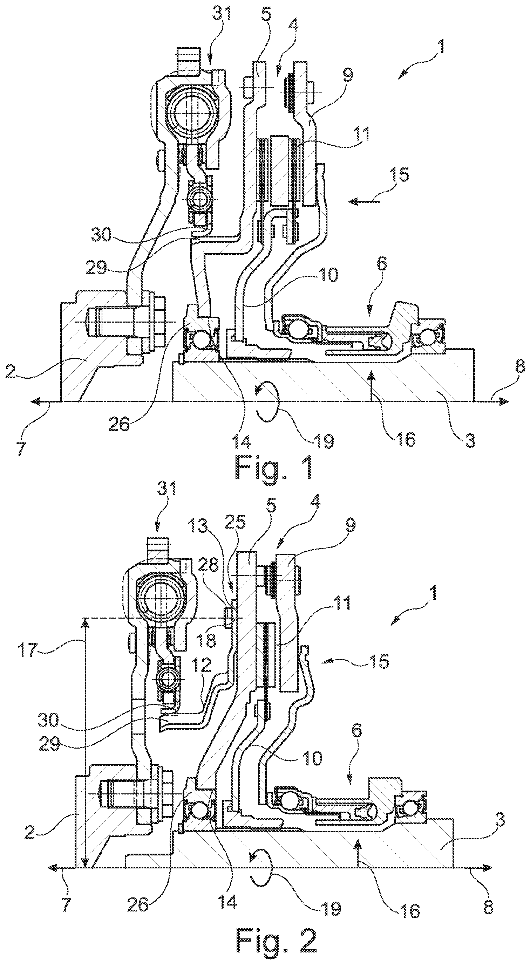

Fig. 1 zeigt eine Reibungskupplung 1 mit einer an der Abtriebsseite 3 gelagerten Gegenplatte 5 in einer Seitenansicht im Schnitt. Die Reibungskupplung 1 dient der Übertragung von Drehmomenten zwischen der Antriebsseite 2 und der Abtriebsseite 3, und umfasst ein ersten Reibpaket 4. Das erste Reibpaket wir gebildet durch eine Gegenplatte 5, eine durch eine Betätigungsvorrichtung 6 (hier ein konzentrisch zur Abtriebsseite 3 angeordneter Ringkolben) der Reibungskupplung 1 in einer axialen Richtung 7, 8 gegenüber der Gegenplatte begrenzt verlagerbare Anpressplatte 9, sowie eine Kupplungsscheibe 10 mit zwei Reibbelägen, die entlang der axialen Richtung 7, 8 zwischen der Anpressplatte 9 und der Gegenplatte 5 angeordnet ist. Die Gegenplatte 5 weist eine Steckverzahnung 29 auf, die eine formschlüssige Übertragung der Drehmomente von der Antriebsseite 2 auf das erste Reibpaket 4 an ermöglicht. Die Steckverzahnung wird zwischen der Gegenplatte 5 und einer Ausgangsseite 30 eines Feder-Dämpfer-Systems 31 gebildet.

Die Gegenplatte 5 ist über eine Lagerfläche 14 an der Abtriebsseite 3 so gelagert, dass zumindest in einer ersten axialen Richtung 7 auf die Gegenplatte wirkende Betätigungskräfte 15 der Betätigungsvorrichtung 6 abgestützt sind.

Fig. 2 zeigt eine Reibungskupplung 1 mit einer an der Abtriebsseite 3 gelagerten Gegenplatte 5 und einem Mitnehmerring 12 in einer Seitenansicht im Schnitt. Auf die Ausführungen zu Fig. 1 wird Bezug genommen. Im Unterschied zur Fig. 1 überträgt hier ein Mitnehmerring 12 die Drehmomente von der Antriebseite 2 auf ein Reibpaket 4 der Reibungskupplung1. Dafür bildet der Mitnehmerring 12 eine aus der WO 2011/124203 A1 bekannte Steckverzahnung 29 mit einem entsprechend geformten Gegenstück der Antriebsseite 2 aus (hier Ausgangsseite 30 eines Feder-Dämpfer-Systems 31). Der Mitnehmerring 12 kann über eine Verschiebung entlang der axialen Richtung 7, 8 bei der Montage der Reibungskupplung 1 mit dem Gegenstück der Antriebsseite 2 zur Ausbildung der (in einer Umfangsrichtung 19 formschlüssigen) Steckverzahnung 29 verbunden werden.

Der Mitnehmerring 12 ist über eine Mehrzahl von Befestigungspunkten 18 an der Anbindungsfläche 13 der Gegenplatte 5 befestigt. Die Anbindungsfläche 13 ist in einer radialen Richtung 16 auf einer Höhe 17, hier außerhalb des mindestens einen Reibbelags angeordnet.

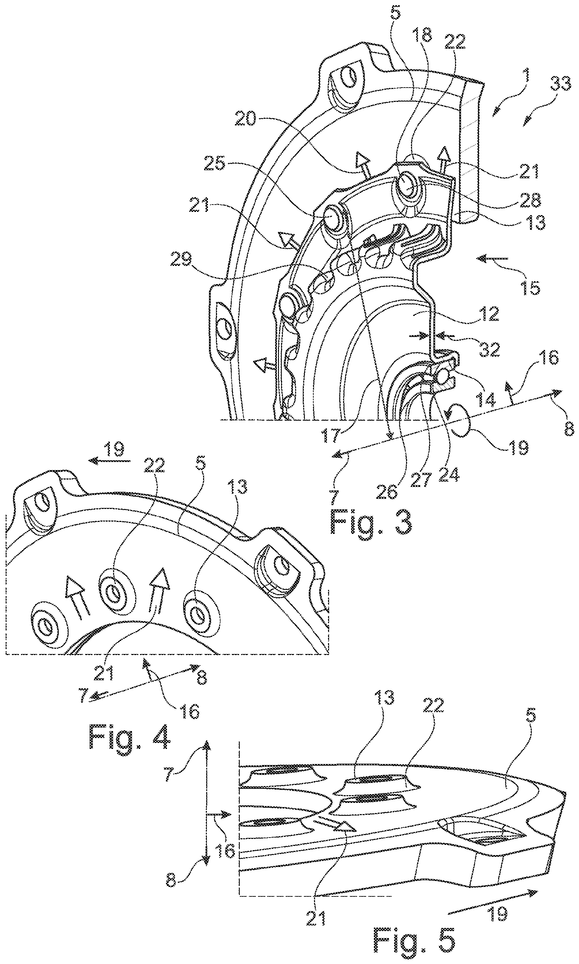

Fig. 3 zeigt eine Gegenplatte 5 mit Mitnehmerring 12 in einer perspektivischen Ansicht im Schnitt. Der Mitnehmerring 12 ist an einer Anbindungsfläche 13 der Gegenplatte 5 befestigt. Der Mitnehmerring 12 über eine Lagerfläche 14 an der Abtriebsseite 3 so gelagert, dass zumindest in einer ersten axialen Richtung 7 auf den Mitnehmerring 12 wirkende Betätigungskräfte 15 der Betätigungsvorrichtung abgestützt sind. Der Mitnehmerring 12 ist über eine Mehrzahl von Befestigungspunkten 18 an der Anbindungsfläche 13 befestigt ist, wobei die Befestigungspunkte 18 in einer Umfangsrichtung 19 gleichmäßig voneinander beabstandet angeordnet sind. Zwischen den Befestigungspunkten 18 liegen jeweils Spalte 20 vor, durch die ein Fluidaustausch 21 entlang der radialen Richtung 16 zwischen der Anbindungsfläche 13 und dem Mitnehmerring 12 möglich ist.

Der Mitnehmerring 12 überträgt die Drehmomente von der Antriebseite 2 auf ein Reibpaket 4 der Reibungskupplung 1 (siehe z. B. Fig. 2). Dafür bildet der Mitnehmerring 12 eine aus der WO 2011/124203 A1 bekannte Steckverzahnung 29 mit einem entsprechend geformten Gegenstück der Antriebsseite 2 aus.

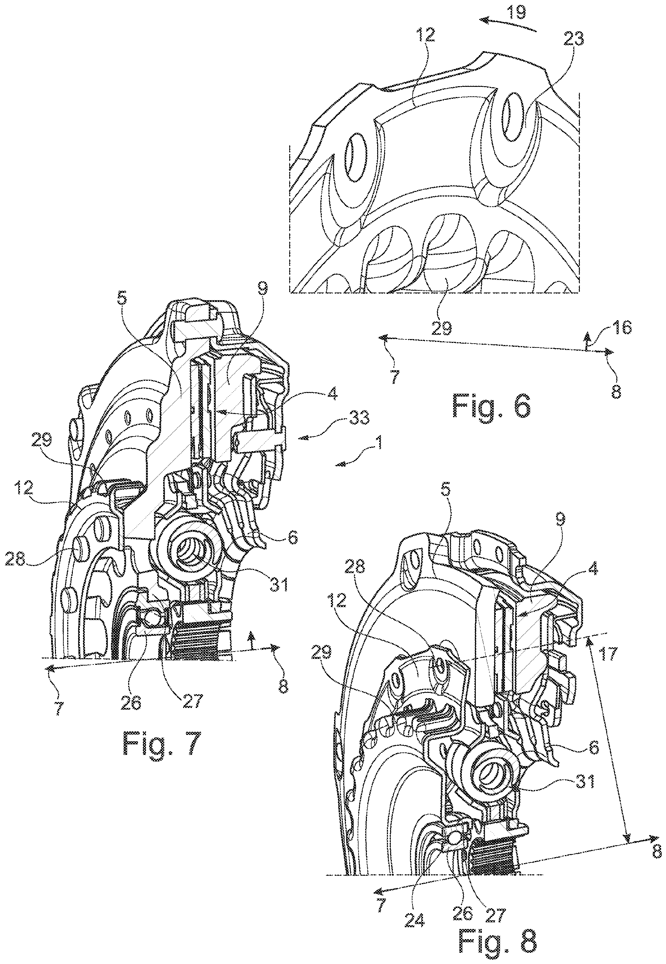

Der Mitnehmerring 12 ist über eine Lagerfläche 14 des Mitnehmerrings 12 an der Abtriebsseite 3 (also z. B. einer Getriebeeingangswelle) so gelagert, dass zumindest die, in einer ersten axialen Richtung 7 auf den Mitnehmerring 12 wirkenden Betätigungskräfte 15 der Betätigungsvorrichtung 6 abgestützt sind. Die Ausbildung der Lagerfläche 14 an dem Mitnehmerring 12 ermöglicht, dass die Gegenplatte 5 sich nur über den Bereich des Reibbelags 11 (siehe Fig. 8) erstrecken muss. Die üblicherweise sehr steif ausgelegte und daher üblicherweise gießtechnisch hergestellte Gegenplatte 5 kann damit wesentlich leichter ausgeführt werden, da sie sich in der radialen Richtung 16 nicht bis zu einer eigenen Lagerfläche 14 an der Abtriebsseite 3 (z. B. der Getriebeeingangswelle) erstreckt. Die Lagerfläche 14 wird hier nun durch den Mitnehmerring 12 gebildet, wobei der Mitnehmerring 12 eine gegenüber der Gegenplatte 5 deutlich reduzierte (mittlere) Wandstärke 32 aufweist.

Die Spalte 20 sind durch sich in der axialen Richtung 7, 8 erstreckende Erhebungen 22, 23 auf zumindest einer von Anbindungsfläche 13 und Mitnehmerring 12 gebildet, wobei die Erhebungen 22, 23 in der Umfangsrichtung 19 (entsprechend den Befestigungspunkten 18) voneinander beabstandet angeordnet sind. Zwischen diesen Erhebungen 22, 23 sind die Spalte 20 ausgebildet, durch die ein Fluidaustausch 21 (Luft oder Öl; und damit ein Wärmeaustausch) in der radialen Richtung 16 von innen nach außen erfolgen kann. In Fig. 3 sind erste Erhebungen 22 an der Gegenplatte 5 angeordnet, die sich hin zum Mitnehmerring 12 erstrecken.

Die Anbindungsfläche 13 (mit den Befestigungspunkten 18 und ersten Erhebungen 22) ist in einer radialen Richtung 16 auf einer Höhe 17 des Reibbelags 4 bzw. innerhalb davon angeordnet (siehe auch Fig. 8). Der Mitnehmerring 12 erstreckt sich nur unwesentlich über die Befestigungspunkte 18 hinaus. Der Mitnehmerring 12 ist über Nietverbindungen 25 an der Anbindungsfläche 13 befestigt.

Bei der hier nur teilweise dargestellten Drehmomentübertragungseinrichtung 33 ist ein Lager 26 zur Lagerung des Mitnehmerrings 12 an einer Abtriebsseite 3 vorgesehen, wobei das Lager 26 eine ebene äußere Umfangsfläche 27 zur Anbindung an die Innenumfangsfläche 24 des Mitnehmerrings 12 aufweist. Als Lager 26 ist so ein Standardlager verwendbar, dessen äußere Umfangsfläche 27 keinen zusätzlichen (sonst üblichen) Anschlag zur Abstützung des Mitnehmerrings 12 oder einer Gegenplatte 5 (siehe Fig. 1 und 2) aufweist. Das Lager 26 ist ein Wälzlager mit einem Außenring, einem Innenring, sowie dazwischen angeordneten Wälzkörpern. Sowohl die äußere Umfangsfläche 27 des Außenrings als auch die innere Umfangsfläche des Innenrings sind eben und zylindrisch ausgeführt.

Fig. 4 zeigt die Gegenplatte 5 nach Fig. 3 in einer perspektivischen Ansicht. Fig. 5 zeigt die Gegenplatte 5 nach Fig. 4 in einer anderen perspektivischen Ansicht. Die ersten Erhebungen 22 sind in der Umfangsrichtung 19 gleichmäßig voneinander beabstandet angeordnet. Zwischen diesen ersten Erhebungen 22 sind die Spalte 20 ausgebildet, durch die ein Fluidaustausch 21 (Luft oder Öl; und damit ein Wärmeaustausch) in der radialen Richtung 16 von innen nach außen erfolgen kann.

Die ersten Erhebungen 22 an der Gegenplatte 5 sind hier durch Bereiche mit erhöhter Wandstärke (größere Materialdicke) gebildet (gegenüber den Bereichen, in denen die Spalte angeordnet sind).

Fig. 6 zeigt den Mitnehmerring 12 nach Fig. 3 in einer perspektivischen Ansicht. Der Mitnehmerring 12 überträgt die Drehmomente von der Antriebseite 2 auf ein Reibpaket 4 der Reibungskupplung 1 über die Steckverzahnung 29. Die zweiten Erhebungen 23 bilden zusammen mit den ersten Erhebungen 22 an der Gegenplatte 5 die Spalte 20.

Fig. 7 zeigt eine (bekannte) Drehmomentübertragungseinrichtung 33 mit einer Reibungskupplung 1 und mit einer, an einem an der Abtriebsseite 3 angeordneten Lager 26 gelagerten Gegenplatte 5 in einer perspektivischen Ansicht im Schnitt. Ein Mitnehmerring 12 ist an der Gegenplatte 5 befestigt. Die Gegenplatte 5erstreckt sich in der radialen Richtung 16 bis zu dem Lager 26. Das Lager 26 weist einen äußeren Lagerring mit nicht eben ausgeführter äußerer Umfangsfläche 27 auf, an der sich die Gegenplatte 5 in der ersten axialen Richtung 7 abstützt. Die Drehmomentübertragungseinrichtung 33 umfasst zudem ein Feder-Dämpfer-System 31 (eine gedämpfte Gegenplatte 5).

Fig. 8 zeigt eine Drehmomentübertragungseinrichtung 33 mit einer Reibungskupplung 1 und mit einer Gegenplatte 5 und Mitnehmerring 12 nach Fig. 3 in einer perspektivischen Ansicht im Schnitt. Auf die Ausführungen zu den Fig. 3 bis 6 wird Bezug genommen. Die Drehmomentübertragungseinrichtung 33 umfasst zudem ein Feder-Dämpfer-System 31 (eine gedämpfte Gegenplatte). Hier wird als Betätigungsvorrichtung 6 eine Tellerfeder eingesetzt, durch die die Anpressplatte 9 entlang der axialen Richtung 7, 8 gegenüber der Gegenplatte 5 verlagerbar ist.

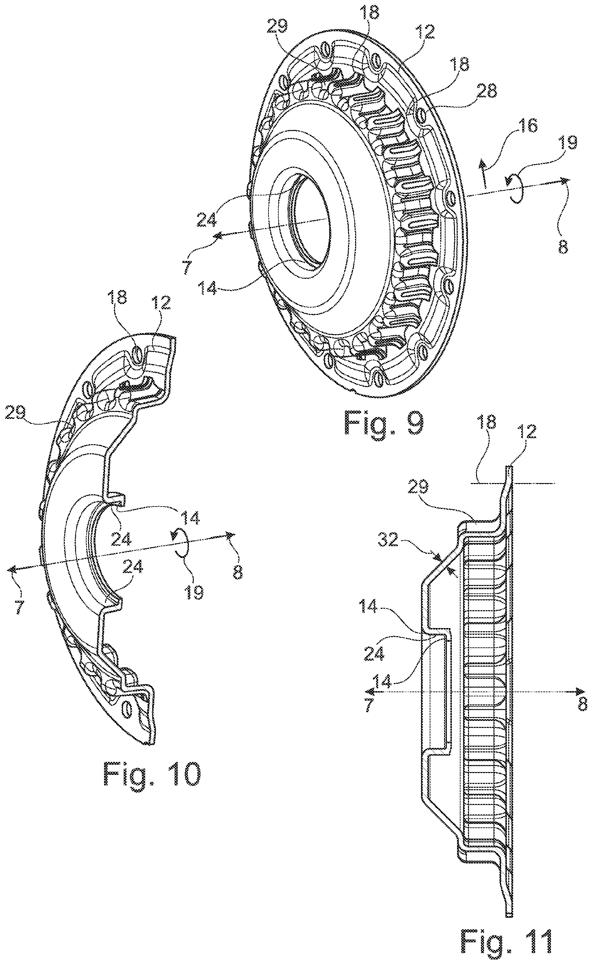

Fig. 9 zeigt einen anderen (besonders bevorzugten) Mitnehmerring 12 in einer perspektivischen Ansicht. Fig. 10 zeigt den anderen Mitnehmerring 12 nach Fig. 9 in einer perspektivischen Ansicht im Schnitt. Fig. 11 zeigt den anderen Mitnehmerring nach Fig. 9 und 10 in einer Seitenansicht im Schnitt. Die Fig. 9 bis 11 werden im Folgenden gemeinsam beschrieben.

Bei diesem Mitnehmerring 12 ist die Lagerfläche 14 an einer Innenumfangsfläche 24 des Mitnehmerrings 12 angeordnet, wobei sich der Mitnehmerring 12, entlang der radialen Richtung 16 und ausgehend von der Befestigung 28 bzw. den Befestigungspunkten 18 an der Anbindungsfläche 13, zwischen den Befestigungspunkten 18 und der Lagerfläche 14 ausschließlich entlang der ersten axialen Richtung 7 erstreckt. Der Mitnehmerring 12 ist im Bereich der Lagerfläche 14 in Richtung der zweiten axialen Richtung 8 umgebogen. Zwischen der Befestigung 28 und der Lagerfläche 14 erstreckt sich der Mitnehmerring aber, entlang der radialen Richtung 16 und ausgehend von der Befestigung 28 ausschließlich entlang der ersten axialen Richtung 7. Damit kann die Steifigkeit des Mitnehmerrings 12 gegenüber den entlang der ersten axialen Richtung 7 auf den Mitnehmerring 12 wirkenden Betätigungskräften 15 der Betätigungsvorrichtung 6, erhöht werden. Die Wandstärke 32 des Mitnehmerrings 12 kann so noch weiter reduziert werden, so dass eine weitere Gewichtseinsparung ermöglicht wird.

### Bezugszeichenliste

- 1: Reibungskupplung
- 2: Antriebsseite
- 3: Abtriebsseite
- 4: erstes Reibpaket
- 5: Gegenplatte
- 6: Betätigungsvorrichtung
- 7: erste axiale Richtung
- 8: zweite axiale Richtung
- 9: Anpressplatte
- 10: Kupplungsscheibe
- 11: Reibbelag
- 12: Mitnehmerring
- 13: Anbindungsfläche
- 14: Lagerfläche
- 15: Betätigungskräfte
- 16: radiale Richtung
- 17: Höhe
- 18: Befestigungspunkt
- 19: Umfangsrichtung
- 20: Spalt
- 21: Fluidaustausch
- 22: erste Erhebung
- 23: zweite Erhebung
- 24: Innenumfangsfläche
- 25: Nietverbindung
- 26: Lager
- 27: äußere Umfangsfläche
- 28: Befestigung
- 29: Steckverzahnung
- 30: Ausgangsseite
- 31: Feder-Dämpfer-System
- 32: Wandstärke
- 33: Drehmomentübertragungseinrichtung

## Patentansprüche

1. Reibungskupplung (1), für einen Antriebsstrang eines Kraftfahrzeugs, zur Übertragung von Drehmomenten zwischen einer Antriebsseite (2) und einer Abtriebsseite (3), mit mindestens einem ersten Reibpaket (4), zumindest umfassend eine Gegenplatte (5), eine durch eine Betätigungsvorrichtung (6) der Reibungskupplung (1) in einer axialen Richtung (7, 8) gegenüber der Gegenplatte (5) begrenzt verlagerbare Anpressplatte (9), sowie mindestens eine Kupplungsscheibe (10) mit mindestens einem Reibbelag (11), die entlang der axialen Richtung (7, 8) zwischen der Anpressplatte (9) und der Gegenplatte (5) angeordnet ist; wobei ein Mitnehmerring (12) zur formschlüssigen Übertragung der Drehmomente von der Antriebsseite (2) auf das erste Reibpaket (4) an einer Anbindungsfläche (13) der Gegenplatte (5) befestigt ist; wobei der Mitnehmerring (12) über eine Lagerfläche (14) an der Abtriebsseite (3) so lagerbar ist, dass zumindest in einer ersten axialen Richtung (7) auf den Mitnehmerring (12) wirkende Betätigungskräfte (15) der Betätigungsvorrichtung (6) abgestützt sind; wobei der Mitnehmerring (12) über eine Mehrzahl von Befestigungspunkten (18) an der Anbindungsfläche (13) befestigt ist, wobei die Befestigungspunkte (18) in einer Umfangsrichtung (19) voneinander beabstandet angeordnet sind, wobei zwischen den Befestigungspunkten (18) jeweils Spalte (20) vorliegen, durch die ein Fluidaustausch (21) entlang der radialen Richtung (16) zwischen der Anbindungsfläche (13) und dem Mitnehmerring (12) möglich ist, **dadurch gekennzeichnet, dass** die Spalte (20) durch sich in der axialen Richtung (7, 8) erstreckende Erhebungen (22, 23) auf zumindest einer von Anbindungsfläche (13) und Mitnehmerring (12) gebildet sind, wobei die Erhebungen (22, 23) in der Umfangsrichtung (19) voneinander beabstandet angeordnet sind.

2. Reibungskupplung (1) nach Anspruch 1, wobei die Anbindungsfläche (13) in einer radialen Richtung (16) auf einer Höhe (17) des mindestens einen Reibbelags (11) oder innerhalb davon angeordnet ist.

3. Reibungskupplung (1) nach einem der vorhergehenden Ansprüche, wobei der Mitnehmerring (12) durch ein Umformverfahren hergestellt ist.

4. Reibungskupplung (1) nach einem der vorhergehenden Ansprüche, wobei die Lagerfläche (14) an einer Innenumfangsfläche (24) des Mitnehmerrings (12) angeordnet ist, wobei sich der Mitnehmerring (12), entlang der radialen Richtung (16) und ausgehend von einer Befestigung (28) an der Anbindungsfläche (13), zwischen der Befestigung (28) und der Lagerfläche (14) ausschließlich entlang der ersten axialen Richtung (7) erstreckt.

5. Reibungskupplung (1) nach einem der vorhergehenden Ansprüche, wobei der Mitnehmerring (12) über Nietverbindungen (25) an der Anbindungsfläche (13) befestigt ist.

6. Reibungskupplung (1) nach einem der vorhergehenden Ansprüche, wobei die Gegenplatte (5) ein Bestandteil eines Zwei-Massen-Schwungrades (26) ist.

7. Reibungskupplung (1) nach einem der vorhergehenden Ansprüche, wobei die Reibungskupplung (1) nur ein Reibpaket (4) aufweist.

8. Reibungskupplung (1) nach einem der vorhergehenden Ansprüche 1 bis 5, wobei die Reibungskupplung (1) zwei Reibpakete (4) aufweist, wobei die zwei Reibpakete (4) zusammen zwei Gegenplatten (5) und zwei Anpressplatten (9) aufweisen.

9. Drehmomentübertragungseinrichtung (33), zumindest umfassend eine Reibungskupplung (1) nach einem der vorhergehenden Ansprüche sowie ein Lager (26) zur Lagerung des Mitnehmerrings (12) an einer Abtriebsseite (2), wobei das Lager (26) eine ebene äußere Umfangsfläche (27) zur Anbindung an eine Innenumfangsfläche (24) des Mitnehmerrings (12) aufweist.

## Claims

1. A friction clutch (1) for a drive train of a motor vehicle, for the transmission of torques between a drive side (2) and an output side (3), with at least one first friction pack (4), at least comprising a counter plate (5), a pressure plate (9) displaceable to a limited extent in an axial direction (7, 8) with respect to the counter plate (5) by means of an actuating device (6) of the friction clutch (1), as well as at least one clutch disc (10) with at least one friction lining (11) which is arranged along the axial direction (7, 8) between the pressure plate (9) and the counter plate (5); wherein a driver ring (12) for positively locking transmission of the torque from the drive side (2) to the first friction pack (4) is attached to a connecting surface (13) of the counter plate (5); wherein the driver ring (12) can be supported via a bearing surface (14) on the output side (3) in such a way that actuating forces (15) of the actuating device (6) acting on the driver ring (12) are supported at least in a first axial direction (7); wherein the driver ring (12) is fastened to the connecting surface (13) via a plurality of fastening points (18), wherein the fastening points (18) are arranged at a distance from one another in a circumferential direction (19), wherein gaps (20) are present between the fastening points (18) in each case, through which fluid exchange (21) along the radial direction (16) between the connecting surface (13) and the driver ring (12) is possible, **characterised in that** the gaps (20) through the elevations (22, 23) extending in the axial direction (7, 8) are formed on at least one of the connecting surface (13) and the driver ring (12), wherein the elevations (22, 23) are arranged spaced apart from one another in the circumferential direction (19).

2. The friction clutch (1) according to claim 1, wherein the connecting surface (13) is arranged in a radial direction (16) at a height (17) of the at least one friction lining (11) or within it.

3. The friction clutch (1) according to any one of the preceding claims, wherein the driver ring (12) is produced by a forming process.

4. The friction clutch (1) according to any one of the preceding claims, wherein the bearing surface (14) is arranged on an inner circumferential surface (24) of the driver ring (12), wherein the driver ring (12) extends along the radial direction (16) and starting from a fastening (28) on the connecting surface (13) between the fastening (28) and the bearing surface (14) exclusively along the first axial direction (7).

5. The friction clutch (1) according to any one of the preceding claims, wherein the driving ring (12) is fastened to the connecting surface (13) via rivet connections (25).

6. The friction clutch (1) according to any one of the preceding claims, wherein the counter plate (5) is part of a dual-mass flywheel (26).

7. The friction clutch (1) according to any one of the preceding claims, wherein the friction clutch (1) has only one friction pack (4).

8. The friction clutch (1) according to any one of the preceding claims 1 to 5, wherein the friction clutch (1) has two friction packs (4), wherein the two friction packs (4) together have two counter plates (5) and two pressure plates (9).

9. A torque transmission device (33), at least comprising a friction clutch (1) according to any one of the preceding claims and a bearing (26) for mounting the driver ring (12) on an output side (2), wherein the bearing (26) has a flat outer peripheral surface (27) for connection to an inner peripheral surface (24) of the driver ring (12).

## Revendications

1. Embrayage à friction (1), pour une chaîne cinématique d'un véhicule à moteur, pour la transmission de couples de rotation entre un côté entrée (2) et un côté sortie (3), comportant au moins un premier ensemble de disques de friction (4), comprenant au moins une contre-plaque (5), une plaque de pression (9) pouvant être déplacée de manière limitée à l'aide d'un dispositif d'actionnement (6) de l'embrayage à friction (1) dans une direction axiale (7, 8) par rapport à la contre-plaque (5), ainsi qu'au moins un disque d'accouplement (10) comportant au moins une garniture de friction (11), qui est disposée dans la direction axiale (7, 8) entre la plaque de pression (9) et la contre-plaque (5) ; une bague d'entraînement (12) pour la transmission par complémentarité de forme des couples du côté entrée (2) étant fixée sur le premier ensemble de disques de friction (4) à une surface de liaison (13) de la contre-plaque (5) ; la bague d'entraînement (12) pouvant être logée à l'aide d'une surface d'appui (14) sur le côté sortie (3) de telle sorte que, au moins dans une première direction axiale (7), des forces d'actionnement (15) du dispositif d'actionnement (6) agissant sur la bague d'entraînement (12) sont maintenues ; la bague d'entraînement (12) étant fixée, à l'aide d'une pluralité de points de fixation (18), à la surface de liaison (13), les points de fixation (18) étant disposés à distance les uns des autres dans le sens périphérique (19), entre les points de fixation (18), des fentes (20) sont respectivement présentes, lesquelles permettent un échange de fluide (21) dans la direction radiale (16) entre la surface de liaison (13) et la bague d'entraînement (12), **caractérisé en ce que** les fentes (20) sont formées à l'aide des élévations (22, 23) s'étendant dans la direction axiale (7, 8) sur au moins la surface de liaison (13) et/ou la bague d'entraînement (12), les élévations (22, 23) étant disposées à distance les unes des autres dans le sens périphérique (19).

2. Embrayage à friction (1) selon la revendication 1, la surface de liaison (13) étant disposée dans une direction radiale (16) à une hauteur (17) de ladite garniture de friction (11) ou à l'intérieur de cette dernière.

3. Embrayage à friction (1) selon l'une quelconque des revendications précédentes, la bague d'entraînement (12) étant fabriquée selon un procédé de formage.

4. Embrayage à friction (1) selon l'une quelconque des revendications précédentes, la surface d'appui (14) étant disposée sur une surface périphérique interne (24) de la bague d'entraînement (12), la bague d'entraînement (12) s'étendant dans la direction radiale (16) et à partir d'une fixation (28) sur la surface de liaison (13), entre la fixation (28) et la surface d'appui (14), exclusivement dans la première direction axiale (7).

5. Embrayage à friction (1) selon l'une quelconque des revendications précédentes, la bague d'entraînement (12) étant fixée, à l'aide des liaisons rivetées (25), à la surface de liaison (13).

6. Embrayage à friction (1) selon l'une quelconque des revendications précédentes, la contre-plaque (5) étant une partie constitutive d'un volant à deux masses (26).

7. Embrayage à friction (1) selon l'une quelconque des revendications précédentes, ledit embrayage à friction (1) ne comportant qu'un seul ensemble de disques de friction (4).

8. Embrayage à friction (1) selon l'une quelconque des revendications 1 à 5 précédentes, ledit embrayage à friction (1) comportant deux ensembles de disques de friction (4), lesdits deux ensembles de disques de friction (4) comportant ensemble deux contre-plaques (5) et deux plaques de pression (9).

9. Dispositif de transmission de couple de rotation (33), comprenant au moins un embrayage à friction (1) selon l'une quelconque des revendications précédentes ainsi qu'un palier (26) pour loger la bague d'entraînement (12) sur un côté sortie (2), ledit palier (26) comportant une surface périphérique (27) externe plane pour la liaison à une surface périphérique interne (24) de la bague d'entraînement (12).
